Europäisches Patentamt

European Patent Office

Office européen des brevets

(19)

(11) Veröffentlichungsnummer: **0 166 362 B1**

(12) **EUROPÄISCHE PATENTSCHRIFT**

(45) Veröffentlichungstag der Patentschrift: **16.01.91**

(51) Int. Cl.⁵: **C 08 B 37/00, A 23 L 1/308**

(21) Anmeldenummer: **85107545.7**

(22) Anmeldetag: **19.06.85**

(54) **Verfahren zur Herstellung von wasserlöslichen Polysacchariden, die so erhältlichen Saccharide und ihre Verwendung.**

(30) Priorität: **26.06.84 DE 3423421**
**02.08.84 DE 3428522**

(43) Veröffentlichungstag der Anmeldung:
**02.01.86 Patentblatt 86/01**

(45) Bekanntmachung des Hinweises auf die
Patenterteilung:
**16.01.91 Patentblatt 91/03**

(84) Benannte Vertragsstaaten:
**AT BE CH DE FR GB IT LI NL SE**

(56) Entgegenhaltungen:
**DE-B-1 173 446**
**DE-C- 521 340**
**US-A-3 346 558**
**US-A-4 024 290**

**CHEMICAL ABSTRACTS, Band 86, Nr.5, 31.
Januar 1977, Seite 391, Zusammenfassung
30012y, Columbus, Ohio, US; U. KRASKA et al.:
"Synthetic polysaccharides using D-glucose and
3,6-anhydro-D-glucose residues" &
CARBOHYDR. RES. 1976, 49, 195-9**

(73) Patentinhaber: **HOECHST
AKTIENGESELLSCHAFT
Postfach 80 03 20
D-6230 Frankfurt am Main 80 (DE)**

(72) Erfinder: **Deger, Hans-Matthias, Dr.
Am Rheingauer Weg 8
D-6238 Hofheim am Taunus (DE)**
Erfinder: **Erckel, Rüdiger, Dr.
Quidnick Street 129
Coventry, R.I. 02816 (US)**
Erfinder: **Franz, Raimund, Dr.
Johann-Strauss-Strasse 36
D-6233 Kelkheim (Taunus) (DE)**
Erfinder: **Fritsche-Lang, Wolfram, Dr.
Rhönstrasse 7
D-6140 Bensheim (DE)**
Erfinder: **VON Rymon Lipinski, Gert-Wolfhard,
Dr.
Hunsrückstrasse 40
D-6230 Frankfurt am Main 80 (DE)**
Erfinder: **Schlingmann, Merten, Dr.
Schneidhainer Strasse 32a
D-6240 Königstein/Taunus (DE)**

EP 0 166 362 B1

**Beschreibung**

Oligo- und polymere Saccharide definierter Struktur sowie natürlichen oder mikrobiologischen Ursprungs werden in der Technik vielfältig als Wasserbinde- bzw. Wasserrückhaltemittel verwendet (vgl. z.B. Ullmanns Encyklopädie der technischen Chemie, 4. Auflage, Bd. 19, 1980, S. 233—263; N. L. Thomas und J. D. Birchall, Cem. Concr. Res. 13 (1983), 830—842).

Aus der britischen Patentschrift 1 262 842 ist ein Verfahren zur synthetischen Herstellung höherer Polysaccharide und von Polysaccharidderivaten der Glucose und Maltose durch Schmelzkondensation von Glucose oder Maltose bekannt, bei dem trockene Glucose oder Maltose oder deren Hydrate oder hochkonzentrierte wäßrige Sirupe mit 5 bis 20 Gewichtsprozent eines lebensmittelverträglichen Polyols und bis zu 10 Mol.-% einer schwer-flüchtigen eßbaren Polycarbonsäure, die als Katalysator und Vernetzungsmittel wirkt, bei vermindertem Druck und bei einer Temperatur geschmolzen werden, die unter dem Zersetzungspunkt der d-Glucose oder d-Maltose liegt, und wobei gleichzeitig das Kondensationswasser entfernt wird. Die zugesetzten Polyole wirken hierbei als innere Weichmacher. Die so erhaltenen Produkte, deren Monomerbausteine in regelloser Weise miteinander verknüpft sind, sollen in diätetischen Lebensmitteln verwendet werden. Nach der deutschen Offenlegungsschrift 2 350 035 müssen die Kondensationsprodukte für bestimmte Anwendungszwecke durch Behandlung mit Sorptionsmitteln oder Bleichmitteln entfärbt werden.

Diese bekannte Verfahren hat eine Reihe von Nachteilen: Als Rohstoffe kommen nur Glucose oder Maltose in Betracht, die ihrerseits Produkte eines chemischen und/oder enzymatischen Abbaus natürlicher Kohlenhydrate wie Stärke sind. Diese Ausgangsmaterialien werden bei der Schmelzkondensation wieder polymerisiert, was kostenungünstig ist. Das Polyol muß lebensmittelverträglich und die Polycarbonsäure eßbar sein, Foderungen, die das Produkt verteuern, so daß es für technische, insbesondere lebensmitteltechnische, Zwecke unwirtschaftlich wird. Vor allem sind Rest-Polyol-Gehalte, z.B. von Sorbit auf Grund seiner laxativen Eigenschaften, oft unerwünscht. Die Bedingungen der Schmelzkondensation sind außerdem schwer zu beherrschen, so daß die Gefahr einer Karamelisierung oder gar Zersetzung des Produktes besteht. Auch können hierbei unlösliche Produkte entstehen, die für viele Anwendungszwecke unerwünscht sind. Ursächlich dafür ist, daß die Polycarbonsäure esterartig in das Produkt eingebaut wird, was zu einer mehr oder weniger starken Vernetzung des Moleküls und damit zu einer Verringerung der Löslichkeit führt.

Der Einsatz solcher wasserunlöslicher Polysaccharide als Lebensmittelzusatzstoffe, insbesondere als Ballaststoffe mit niedrigkalorischem Wert, ist in ihrem Nutzen umstritten, da bekannt ist, daß diese durch Persorption in den Blutkreislauf gelangen und Thrombosen verursachen könn en (H. J. Kinkel, J. Gudjons und M. Plate, Naturwissenschaften 69 (1982), 241).

Die Anwesenheit nicht veresterter Carboxygruppen verleiht dem Kondensationsprodukt zudem saurer Eigenschaften, die für einige Anwendungszwecke, z.B. als diätetische Zusatzstoffe, unerwünscht sind.

Es wurde nun gefunden, daß in einem einfachen Verfahren mit billigem Rohstoffen wasserlösliche polymere Saccharide erhalten werden können, die die vorstehend genannten Nachteile nicht aufweisen. Die Erfindung betrifft somit ein Verfahren zur Herstellung von wasserlöslichen Polysacchariden durch Umsetzung von Aldosen oder Kohlenhydraten, die sich zu mindestens 50 Mol% von Aldosen als Monomer-Bausteinen ableiten, mit einer Säure, wobei mehrwertige Alkohole mitverwendet werden, das dadurch gekennzeichnet ist, daß flüssiger Fluorwasserstoff als Säure und gegebenenfalls gleichzeitig als Lösungsmittel verwendet wird, daß dieser abdestilliert wird, daß man bei einer Temperatur von höchstens 120°C arbeitet und stets mehrwertige Alkohole in einer Menge von mindestens 0,01%, bezogen auf das Gewicht der Summe von Aldose und Kohlenhydrat, mitverwendet. Es sei in diesem Zusammenhang ausdrücklich vermerkt, daß die Mitverwendung von mehrwertigen Alkoholen bisher nur in bezug auf die Umsetzung von Glucose oder diese als einzigen Monomer-Baustein enthaltenden Kohlenhydraten bekannt ist. In den vorstehenden und folgenden Ausführungen werden die mehrwertigen Alkohole auch als Polyole und Polyalkohole bezeichnet und unter den Begriffen polymere Saccharide und Polysaccharide Produkte verstanden, die zum größten Teil einen Polymerisationsgrad von ≥2 aufweisen.

Es ist zwar aus der US—PS 3,346,558 ein Verfahren zur Umsetzung von Stärke mit Polyolen in Gegenwart von katalytischen Mengen Säure zu Polyol-Glycosiden bekannt, wobei so gearbeitet wird, daß die Mischung zwischendurch nicht geliert und das Verfahren dadurch undurchführbar wird. Dieses Ziel wird dadurch erreicht, daß man bei einer Temperatur von mindestens 170°C arbeitet. Von dieser Arbeitsweise unterscheidet sich die Erfindung grundsätzlich durch die Anwendung weitaus niedrigerer Temperaturen. Ein weiterer bedeutender Unterschied liegt, darin, daß die Säure nach der Entgegenhaltung nur in katalytischen Mengen verwendet werden soll. Es ist offensichtlich, daß ein solches Verfahren, bei dem derart geringe Mengen Säure verwendet werden, sich grundsätzlich von dem erfindungsgemäßen Verfahren unterschiedet, bei dem bestimmte Kohlenhydrate mit Fluorwasserstoff unter solchen Bedingungen umgesetzt werden, daß dieser aus dem Reaktionsgemisch hinterher abdestilliert wird.

Das Verfahren der vorgenannten US—PS wird gemäß der US—PS 4 024 290 dahin abgewandelt, daß als saure Katalysatoren nunmehr saure Ionenaustauscherharze verwendet werden, die eine Herabsetzung der Temperatur auf den Bereich von 120—200°C, vorzugsweise etwa 160°C bei 25 mmHg, erlauben. Hier wird ebenso wie übrigens in der US—PS 3 346 558 audrücklich darauf hungewiesen, daß Mineralsäuren ein weniger erwünschtes Produkt ergeben.

EP 0 166 362 B1

Es ist ferner bekannt, daß Glucose bzw. einfache Zuckerarten bei der Umsetzung mit Fluorwasserstoff zunächst zu Glucosylfluorid bzw. Polyglucosanen reagieren, wobei das Glucosylfluorid in Abhängigkeit von seiner Konzentration mit sich selbst zu Polyglucosanen polykondensieren kann (vgl. Defaye, Gadelle und Pedersen, Carbohydr. Res. *110* (1982), 217—227, Chem. Abstracts *86* (1977) 30012 y und die DE—PS 521340 Dabei werden unter "einfachen Zuckerarten" Glucose oder solche Zuckerarten verstanden, die sich von Glucose ableiten, wie das Lävoglucosan, das aber keine Aldose ist, oder die Cellobiose, in der zwei Glucoseeinheiten in β-1,4-Bindung vereinigt sind. Über die mögliche Mitverwendung von mehrwertigen Alkoholen wird in diesen Literaturstellen nichts gesagt. Es war aber zu erwarten, daß die Polyalkohole, die kein glykosidisches Kohlenstoffatomen besitzen, als Reaktionsketten-Abbrecher wirken und somit die Polykondensation behindern würden. Andererseits bildet sich, wie aus der Literatur bekannt ist (R. M. Layton, J. C. Vlazny, Food Product Development *12* (1978), 2, 53; US—PS 4 376 198), aus äquivalenten Mengen von Glucose und Sorbit unter den Bedingungen der Schmelzkondensation ausschließlich Glukosylsorbit.

Dies ist überraschenderweise auch beim Einsatz höherer Anteile an Polyalkohol beim Verfahren der Erfindung nicht in dem Umfang der Fall. Bei Verwendung äquivalenter Mengen von Glucose und Sorbit werden noch bis zu einem Drittel Polysaccharide gebildet.

Diese in Gegenwart eines Polyalkohols unter Mitwirkung von Fluorwasserstoff erhältlichen Polysaccharide sind neu und daher ebenfalls Gegenstand der Erfindung. Die Erfindung betrifft außerdem die Verwendung der erfindungsgemäßen Polysaccharide als Wasserbinde- bzw. Wasserrückhaltemittel im weiteren Sinne, insbesondere in Lebensmitteln.

Insbesondere dann, wenn für die Herstellung der Polysaccharide lebensmitteltechnisch unbedenkliche Polyalkohole verwendet werden, sind die erfindungsgemäß hergestellten Polysaccharide als Lebensmittelzusatzstoffe mit vermindertem Kalorienwert geeignet, d.h. als diätetische Nahrungsmittelbestandteile in verschiedenen Nahrungszubereitungen einsetzbar, wie z.B. in Bonbons, Schokoladenpudding, Gebäck oder Gelatine-Desserts. In allen genannten Speisen und Nahrungsmitteln wirken sie als Gerüststoffe mit niedrigem Kaloriengehalt, indem sie die Textur bzw. Struktur z.B. von Mehl bzw. Saccharose anteilig ersetzen können.

Die erfindungsgemäßen Polysaccharide werden durch amylolytische Enzyme wie α-Amylase und Amyloglukosidase sowie β-Galaktosidase nur in untergeordnetem Ausmaß abgebaut.

Als Ausgangsstoffe können neben Glucose insbesondere alle anderen Di-, Oligo- oder Polysaccharide eingesetzt werden, die allein aus Glucose- bzw. Anhydroglycosebausteinen aufgebaut sind, wie zum Beispiel Maltose, Cellobiose, Trehalose, Isomaltose, Gentiobiose, Maltotriose, Cellotriose etc. bis hin zu Cellulose, Stärke, Glykogen und ähnl.. Erfindungsgemäß einsetzbar sind auch feste Gemische von Mono-, Di- oder Oligosacchariden, wie zum Beispiel Maltodextrine oder Cellodextrine (α- bzw. β-1,4-Glucane), wie sie aus industriellen Verfahren erhalten werden. Neben den wirtschaftlich interessanten Cellulose- und Stärke-Produkten verschiedener Herkunft sind auch andere Glucane mit entsprechend variiertem Verknüpfungstyp im Sinne der Erfindung einsetzbar.

Es lassen sich jedoch aus solche Kohlenhydrate zu wasserlöslichen Polysacchariden umsetzen, die neben Anhydroglucose noch andere Zucker-Monomer-Bausteine enthalten oder ausschließlich aus von Anhdroglucose verschiedenen Monomer-Bausteinen aufgebaut sind, soweit diese mindestens zu 50 Mol% aus Aldosen bestehen. Als Ausgangsmaterialien kommen dementsprechend, gegebenenfalls neben der zuvor genannten Verbindungen, in Betracht: Monosaccharide wie Galactose oder Mannose, Oligosaccharide wie Lactose, Saccharose oder Raffinose sowie Polysaccharide wie Guaran oder andere Pflanzengummen. Die Schlüsselsubstanz des Stoffwechsels, die Glucose, ist somit in diesen Verfahrensprodukten—im Vergleich zu den zuvor genannten Produkten—in verringertem Maße oder überhaupt nicht enthalten, was bei der Bildung statistisch verknüpfter Polysaccharide zu Produkten mit weiter erniedrigter Verdaulichkeit führen kann. Diese Produkte lassen sich mit oder ohne mehrwertige Alkohole herstellen.

Als mehrwertige Alkohole sind erfindungsgemäß einsetzbar zum Beispiel Äthylenglykol, die verschiedenen Propandiole, Glycerin, Erythrit, Threit, Pentite und Hexite wie Ribit, Arabinit, Lyxit, Xylit, Sorbit (Glucit), Mannit, Galaktit, Allit, Gulit, Idit, Altrit, Talit sowie entsprechend die stereoisomeren Heptite und Oktite. Aber auch andere Verbindungen mit mindestens zwei Hydroxygruppen sind im gleichen Sinne verwendbar. Als Beispiele seine aufgeführt: Butan-1,4-diol, Diäthylenglykol, Cyclohexan-1,2-diol, Pentaerythrit und Cyclite.

Die mehrwertigen Alkohole werden in Mengen von mindestens 0,01%, im allgemeinen 0,01 bis 20%, bevorzugt 0,05 bis 10%, insbesondere von 0,1 bis 5 Gew.-%, bezogen auf das Ausgangsmaterial, eingesetzt. Größere Menge sind verfahrenstechnisch möglich, bringen aber keine Vorteile und können für bestimmte Anwendungen der Produkte nachteilig sein. Erfindungsgemäß kommen also auch sehr viel geringere Polyolmengen als nach dem Verfahren der britischen Patentschrift 1 262 842 in Betracht. Dabei werden die Polyalkohole in Form ihrer Glykoside an die Polysaccharide gebunden, und zwar umso vollständiger, je niedriger der zugesetzte Anteil ist. Damit unterscheiden sich derartige Produkte in ihrer Struktur von solchen Kondensationsprodukten, die ohne den Zusatz eine Polyalkohols in Fluorwasserstoff erhalten werden.

Bei dem erfindungsgemäßen Verfahren wird als Rohprodukt eine Lösung erhalten, die neben dem Fluorwasserstoff das bei der Kondensation freigewordene Wasser enthält. Zur Isolierung des

3

Reaktionsproduktes wird der Fluorwasserstoff, am einfachsten durch Destillation, mehr oder weniger vollständig, zweckmäßig so weit wie möglich, entfernt. Nach dem Abdestillieren des Fluorwasserstoffs hinterbleibt ein farbloser bis schwach grau gefärbter, homogener Sirup, dessen wäßrige Lösung keiner weiteren Reinigung bedarf, sondern, gegebenenfalls nach Neutralisation, unmittelbar eingesetzt werden kann.

Das erfindungsgemäße Verfahren wird vorteilhaft wie folgt durchgeführt:

1) Herstellung einer Lösung eines der möglichen Ausgangsstoffe und eines mehrwertigen Alkohols in flüssigem Fluorwasserstoff, wobei das Saccharid in einer Konzentration von 10 bis 60 Gew.-%, vorzugsweise 25 bis 35 Gew.-% bezogen auf die Lösung, eingesetzt wird und der mehrwertige Alkohol in einer Menge von 0,01—20%, bevorzugt 0,05—10%, insbesondere 0,1—5 Gew.-%, bezogen auf den Ausgangsstoff, d.i. die Summe von Aldose und Kohlenhydrat, verwendet wird,

2) Einhalten einer Reaktionszeit (Rührzeit) von 5 Minuten bis 10 Stunden, bevorzugt 30 Minuten bis 6 Stunden, insbesondere 45 Minuten bis 1,5 Stunden, bei Temperaturen von −25°C bis +120°C, vorzugsweise 10—80°C,

3) Abdestillieren des Fluorwasserstoffs, gegebenenfalls unter vermindertem Druck, mit oder ohne Schutz- bzw. Trägergas, zu dessen Wiederverwendung,

4) bei Bedarf Lösen des hinterbleibenden, homogenen, farblosen bis schwach grauen Sirups in Wasser, Entfernen der enthaltenen Menge restlichen Fluorwasserstoffs durch Behandeln mit geeigneten Ionenaustauschern oder Neutralisieren mit Calciumhydroxid oder Calciumcarbonat und Abfiltrieren oder Zentrifugieren des gebildeten Calciumfluorids, das gegebenenfalls einer Fluorwasserstoff-Rückgewinnung zugeführt werden kann,

5) bei Bedarf Feststoff-Gewinnung aus der Lösung (z.B. durch Gefriertrocknung).

Die Feststoff-Ausbeuten beim erfindungsgemäßen Verfahren hängen ausschließlich von der verfahrenstechnischen Ausgestaltung von Aufarbeitungs-Schritten wie Filtration oder Ionenaustauschern ab, die dem Fachmann bekannt sind und liegen in der Regel über 90 Gew.-%, bezogen auf die Einsatzmenge. Das nach dem beschrieben Verfahren hergestellte Material ist durch Anwendung der Gefriertrocknung als farbloses oder schwach gelbliches Pulver erhältlich. Das in dieser Form erhaltene Produkt zeichnet sich dadurch aus, daß es ohne Eigengeschmack und vollständig wasserlöslich ist, in Lösung praktisch keine Eigenfärbung aufweist und einen neutralen pH-Wert besitzt.

Durch die Ausfällung als unlösliches Calciumfluorid und/oder die Anwendung wirksamer Ionenaustauscher gelingt es, den Rest-Fluorgehalt im Produkt auf einen Wert unter 20 ppm zu reduzieren.

Gegenüber dem Stand der Technik, wie er eingangs beschrieben ist, weist das Verfahren der Erfindung folgende Vorteile auf: Im Vergleich mit dem Schmelzkondensation lassen sich durch die Verwendung von flüssigem Fluorwasserstoff als Reagenz bzw. Katalysator und gegebenenfalls als Lösemittel niedrige Reaktionstemperaturen bei gleichzeitig kurzen Reaktionszeiten einhalten. Bei Kohlenhydraten oft beobachtete Karamelisierungen lassen sich so vermeiden und man erhält hellere bzw. farblose Produkte. Grundsätzlich liefert das erfindungsgemäße Verfahren vollständig wasserlösliche Produkte, weil bei seiner Durchführung keine vernetzenden Substanzen (wie z.B. Citronensäure, die Triester bilden kann) eingesetzt zu werden brauchen. Das erfindungsgemäße Verfahren gestattet es, neben Glucose auch andere, gegebenenfalls billigere, aus Anhydroglucose oder anderen Zucker-Monomeren aufgebaute Kohlenhydrate einzusetzen, ohne daß, bedingt durch die entsprechenden Substanzeigenschaften, verfahrenstechnische Probleme auftreten.

Ein besonderer Vorteil des Verfahrens besteht darin, durch Ausschluß von Feuchtigkeit oder Zugabe definierter Wassermengen die Molekulargewichtsverteilung der erhaltenen Polysaccharide beeinflussen zu können, und zwar in Bereichen zwischen DP 1 bis 100 (DP=Polymerisationsgrad (degree of polymerization)), entsprechend Molekulargewichten zwischen 180 und 16 000, insbesondere zwischen 350 und 10 000.

Das Verfahren der Erfindung ermöglicht es somit, durch entsprechende Wahl der Reaktionsbedingungen, insbesondere des Feuchtegehaltes, Gemische von wasserlöslichen, hellfarbigen, von Glucose abgeleiteten Polysacchariden unterschiedlicher mittlerer Kettenlänge herzustellen. Die Abschätzung der mittleren Kettenlänge kann z.B. aus dem Gelpermeations-Chromatogramm des Produktes erfolgen.

Die Struktur der erfindungsgemäß hergestellten Produkte kann durch Anwendung chromatographischer und spektroskopischer Methoden untersucht werden. Am Beispiel der aus Glucose, Cellulose bzw. Stärke und jeweils 1% Sorbit gewonnenen Saccharide werden die durch Methylierungsanalysen (Lit. Übersicht S. Svensson, Angew. Chem. 82 (1970) 16, 643—652) bestimmten Bindungsverhältnisse in Tabelle 1 wiedergeben.

# EP 0 166 362 B1

## TABELLE 1
### Die Bindungsarten in % (erhalten durch Methylierungsanalyse)
### in Abhängigkeit von den Einsatzstoffen

| Einsatzstoffe | Glucose | Cellulose | Stärke |
|---|---|---|---|
| lineare Anteile | 38—54 | 40—56 | 38—54 |
| verzweigte Anteile | 9—19 | 5—15 | 4—14 |
| Endgruppen-Anteile | 32—48 | 33—49 | 36—52 |
| 1,6- und 1,X,6-Anteile | 24—36 | 25—35 | 22—32 |

Aus Tabelle 1 wird deutlich, daß bei den erfindungsgemäßen Produkten, die alle den gleichen Monomer-Baustein (Glucose) enthalten, vergleichbare Verknüpfungsmuster gefunden werden. Bei höherem Polyalkoholgehalt wird vor allem eine Erhöhung der Endgruppen-Anteile, z.B. bei 10% Sorbit auf durchschnittlich 50%, beobachtet. Die darin enthaltenen reduzierenden Endgruppen lassen sich durch Anwendung der Oxidation mit Dinitrosalicylsäure (vgl. Hevl. Chim. Acta *34* (1951) 2133—2139) erfassen. Dabei ist mit zunehmendem Polyalkohol-Gehalt erwartungsgemäß ein Abnehmen des Anteils an reduzierenden Endgruppen zu beobachten.

Die Methylierungsanalyse zeigt auch einen charakteristischen Unterschied zwischen den erfindungsgemäßen und den durch Schmelzkondensation hergestellten literaturbekannten Sacchariden. In den ersten werden ausschließlich pyranoide Strukturen gefunden, während bei letzteren 10% der Ketten- und Endglieder furanoide Strukturen darstellen. Die furanoiden Strukturen sind auch im $^{13}$C-NMR-Spektrum nachweisbar.

Die Auswertung der $^{13}$C-NMR-Spektren der erfindungsgemäß erhaltenen Saccharide bestätigt die oben dargestellten Anteile der verschiedenen glykosidischen Bindungen und gibt zusätzlich über die Konfiguration an den anomeren Kohlenstoffatomen Aufschluß. Laut Integration der anomeren Kohlenstoff-Signale werden α/β-Verhältnisse von 95:5 bis 45:55, insbesondere zwischen 65:35 und 85:15 abgeschätzt. Neben dem fehlenden Gehalt an Polycarbonsäure-Resten ist dies ein weiteres Unterscheidungsmerkmal zu den aus Glucose, einem Polyol und einer Polycarbonsäure gemäß dem Stand der Technik durch Schmelzkondensation herstellbaren Polysacchariden. Diese weisen in der Regel ein α/β-Verhältnis unter 40:60 auf.

Der Restgehalt an nichteingebautem Polyalkohol kann durch Anwendung der Hochdruck-Flüssigkeitschromatographie (HPLC) bestimmt werden und beträgt in der Regel unter 10% der eingesetzten Menge an Polyalkohol. Mit der gleichen Methode können auch Glucose sowie andere Monosaccharide sowie spurenweise entstandenes Lävoglucosan analysiert werden.

Der in das Kohlenhydrat-Gerüst eingebaute Polyalkohol kann durch saure Hydrolyse der erfindungsgemäßen Produkte wieder freigesetzt und neben Glucose bzw. den anderen Monosacchariden in den vorgegebenen Verhältnissen nachgewiesen werden.

Ein weiteres Unterscheidungsmerkmal ist der Spezifische Drehwert der Polysaccharide, der in einem Polarimeter bestimmt wird. Bei den erfindungsgemäßen Produkten liegt er in der Regel über +100° (10-proz. Lösung in Wasser), während er bei den erwähnten literaturbekannten Produkten nur etwa +60° beträgt.

Die folgenden Beispiel erläutern die Erfindung näher:

**Beispiel 1**

Die Reaktion wird in einer Polytetrafluoräthylen-(PTFE)-Destillationsapparatur durchgeführt, bestehend aus 650 ml Rundkolben, 50 cm-Kolonne (ohne Füllkörper), Destillationsaufsatz, Liebigkühler (Luftkühlung genügt), Vakuumvorstoß und 650 ml-Vorlage (auf −60°C gekühlt).

Zu dem vorgelegten, auf 0°C vorgekühlten, flüssigen Fluorwasserstoff (300 g) werden unter Rühren 128 g wasserfreie Glucose und 1,28 g Sorbit (1%, bezogen auf Glucose) gegeben und das Gemisch 1 h bei 20°C gerührt (Magnetrührung). Unter Erwärmen auf 50—60°C und Rühren wird bei langsam verbessertem Vakuum der Fluorwasserstoff abdestilliert, der Hauptteil bei vollem Wasserstrahlvakuum. Nach 1,5—2,5 h sind etwa 90—95% des eingesetzten Fluorwasserstoffs entfernt. Man erhält ca. 145—160 g eines wasserhellen Sirups. Dieser wird in 300 ml Wasser aufgenommen, mit festem Calciumcarbonat unter Rühren neutralisiert, das ausgefällte Calciumfluorid abzentrifugiert und der Überstand mit einem Filterhilfsmittel filtriert. Die wasserhelle Lösung wird auf ein Volumen von etwa 200 ml eingeengt und über Nacht gefriergetrocknet. Man erhält 108—115 g farbloses, amorphes nur wenig hygroskopisches Pulver (83,5—88,9 Gew.%).

Der Gehalt an reduzierenden Endgruppen beträgt 5,2—8,5%. Der spezifische Drehwert beträgt $[\alpha]_D^{20}$ (C=10, H$_2$O) ca. 140°; lt. HPLC-Analyse werden 2,8—3,1% Glucose, 0,06—0,1% Sorbit und 0,1—0,2% Lävoglucosan bestimmt.

5

**Beispiel 2**

Entsprechend dem in Beispiel 1 beschriebenen Vorgehen werden in 250 ml flüssigem Fluorwasserstoff 82,5 g Cellulose (Cellulose S, Riedel de Haen) und 0,83 g Sorbit umgesetzt und im Wasserstrahlvakuum zu einem hellgrauern Sirup eingedampft. Die gleiche Aufarbeitung wie in Beispiel 1 ergibt 78 g farblose Saccharide (Ausbeute 93,0%).

Red. Endgruppengehalt: 5,0% $[\alpha]_D^{20}$ (C=10, $H_2O$)=+145,1°
HPLC-Analytik: Glucose 1,4%
Sorbit <0,1%
Lävoglucosan <0,2%

**Beispiel 3**

In einem zylindrischen Rührkessel aus Edelstahl werden 800 g trockener, flüssiger Fluorwasserstoff auf −27°C abgekühlt und unter weiterer Außenkühlung ein Gemisch aus 400 g Stärke und 4 g Sorbit so eingetragen, daß die Innentemperatur +23°C erreicht. Dann wird die Kühlung entfernt und bei einer Innentemperatur von 7—12°C 1 Std. nachgerührt. Danach wird das Kühlbad durch ein Wasserbad von +40°C ersetzt, ein solgespeister absteigender Edelstahlkühler aufgesetzt, der in eine Trockeneis-gekühlte Vorlage mündet, und ein zum raschen Abdestillieren des Fluorwasserstoffs ausreichendes Vakuum angelegt. Diese Vakuum wird im Lauf der Zeit verbessert, um eine hohe Destillationsgeschwindigkeit aufrechtzuerhalten. Auf diese Weise werden in 2,5 Stunden 700 g Fluorwasserstoff zurückgewonnen. Der Rücksand im Reaktor wird 1 in 1 l kaltem Wasser unter Rühren und mäßiger Kühlung gelöst, mit festem technischem Calciumhydroxid swach alkalisch gestellt und durch Einwerfen von Trockeneis neutralisiert. Die so erhaltene Suspension wird durch ein Bett aus Filterhilfsmittel abgesaugt und das klare, nur schwach gefärbte Filtrat getriergetrocknet. Man erhält einen fast farblosen Feststoff in einer Ausbeute von 364 g (90%, bezogen auf die eingesetzte Stärke).

**Beispiel 4**

In den in Beispiel 1 beschriebenen Apparaten werden 121,1 g trockene Glucose und 13,5 g Sorbit (Gewichtsverhältnis 9:1) in 314 g vorgelegtem Fluorwasserstoff gelöst, was einer 30 proz. Lösung der Komponenten entspricht. Nach 1 Stunde Reaktion bei 25°C wird wie in Beispiel 1 beschrieben weiterverfahren. Man erhält nach Gefriertrocknung ein farbloses Pulver: 121,5 g (90,3 Gew.-%).

Red. Endgruppengehalt: 7,1% $[\alpha]_D^{20}$ (C=10, $H_2O$)=+112,5°
HPLC-Analytik: Glucose 2,8%
Sorbit 0,9%
Lävoglucosan 0,12%

**Beispiel 5**

In den in Beispiel 1 beschriebenen Apparaten werden 61,2 g trockene Glucose und 0,6 g Glycerin (1 Gew.-%) in 144 g vorgelegtem flüssigem Fluorwasserstoff gelöst, was einer 30 proz. Lösung der Komponenten entspricht. Nach 1 Stunde Reaktionszeit bei 25°C wird wie in Beispiel 1 beschrieben weiterverfahren. Man erhält nach Gefriertrocknung ein farbloses Pulver: 57,95 g (93,8 Gew.-%).

Red. Endgruppengehalt: 19,4% $[\alpha]_D^{20}$ (C=10, $H_2O$)=+114°
HPLC-Analytik: Glucose 9,2%
Glycerin <0,1%
Lävoglucosan <0,2%

**Beispiel 6**

In den in Beispiel 1 beschriebenen Apparaten werden 75,8 g trockene Glucose und 0,7 g Glykol (1 Gew.-%) in 177 g vorgelegtem flüssigem Fluorwasserstoff zur Reaktion gebracht. Nach 1 Stunde Reaktionszeit bei 25°C wird wie in Beispiel 1 beschrieben aufgearbeitet. Man erhält nach Gefriertrocknung 68,5 g farblose Saccharide (89,5 Gew.-%).

Red. Endgruppengehalt: 13,9% $[\alpha]_D^{20}$ (C=10, $H_2O$)=+127,3°
HPLC-Analytik: Glucose 4,0%
Glykol <0,1%
Lävoglucosan <0,2%

**Beispiel 7**

Gemäß Beispiel 1 werden 118,8 g Stärke (Riedel de Haen) und 13,2 g Sorbit (Gewichtsverhältnis 9:1) in 308 g vorgegeletem flüssigem Fluorwasserstoff gelöst und 1 h bei 25°C gehalten. Nach der in Beispiel 1 beschriebenen Aufarbeitung und Gefriertrocknung werden 105,2 g farbloses Produkt erhalten (79,7 Gew.-%).

Red. Endgruppengehalt: 5,5% $[\alpha]_D^{20}$ (C=10, $H_2O$)=107,9°
HPLC-Analytik: Glucose 2,3%
Sorbit 0,9%
Lävoglucosan 0,12%

Beispiel 8

In der in Beispiel 1 beschriebenen Apparatur werden 88,8 g Cellulose (Cellulose S, Riedel de Haen), welche zu 20% Wasser enthält, und 0,88 g Sorbit in 207 g flüssigem Fluorwasserstoff gelöst (30 proz. Lösung der Komponenten). Nach 1 Stunde wird wie in Beispiel 1 beschrieben aufgearbeitet. Man erhält nach Gefriertrocknung 64,4 g farblose Saccharide (89,5 Gew.-%).

Red. Endgruppengehalt: 10.9% $[\alpha]_D^{20}$ (C=10, $H_2O$)=+121,9°
HPLC-Analytik: Glucose 3,6%
Sorbit <0,1%
Lävoglucosan <0,2%

Beispiel 9

In der in Beispiel 1 beschriebenen Apparatur werden 87,0 g Glucose-monohydrat und 0,88 g Sorbit in 205 g vorgelegtem flüssigem Fluorwasserstoff gelöst (30 proz. Lösung der Komponenten). Nach 2 Stunden bei 35°C wird abweichend von Beispiel 1 folgendermaßen aufgearbeitet: nach dem Abdestillieren des Fluorwasserstoffs in Vakuum wird der verbleibende farblose Sirup mit 300 ml Wasser aufgenommen, mit 550 g feuchtem, vorher neutral gewaschenem basischem Anionenaustauscher (Fa. Merck, Typ I) 1/2 Stunde gerührt, filtriert, mit 2×100 ml Wasser gewaschen, das Filtrat auf ein Dritten eingeengt und gefriergetrocknet: 72,2 g farblose Saccharide (92,3 Gew.-%).

Red. Endgruppengehalt: 12,3% $[\alpha]_D^{20}$ (C=10, $H_2O$)=+117,4°
HPLC-Analytik: Glucose 3,9%
Sorbit <0,1%
Lävoglucosan <0,2%

Beispiel 10

In der in Beispiel 1 beschriebenen Apparatur werden 119,2 g Cellulose (Cellulose S. Riedel de Haen) und 13,2 g Sorbit (Gewichtsverhältnis 9:1) in 309 g vorgelegtem flüssigem Fluorwasserstoff gelöst. Nach 1 Stunde bei 25°C wird wie in Beispiel 1 beschrieben aufgearbeitet. Man erhält ein farbloses Pulver: 111,4 g (84,1 Gew.-%).

Red. Endgruppengehalt: 2,5% $[\alpha]_D^{20}$ (C=10, $H_2O$)=+111.8°
HPLC-Analytik: Glucose 1,2%; Sorbit 0,9%;
Lävoglucosan 0,2%.

Beispiel 11

In der in Beispiel 1 beschriebenen Apparatur werden 41,4 g trockene Glucose und 41,4 g Sorbit in 193 g vorgelegtem flüssigem Fluorwasserstoff gelöst. Nach einer Reaktionszeit von 1 Stunde bei 25°C wird wie in Beispiel 1 beschrieben weiterverfahren. Man erhält 74,7 g farblose Saccharide (90,2 Gew.-%).

Red. Endgruppengehalt: 0,7% $[\alpha]_D^{20}$ (C=10, $H_2O$)=+56,7°
HPLC-Analytik: Glucose 1,75%
Sorbit 21,4%
Lävoglucosan <0,2%
Oligo-/Polysaccharide 23,9%
Glucosylsorbit 49,3%

Beispiel 12

In der in Beispiel 1 beschriebenen Apparatur werden 113,4 g trockene Glucose und 12,6 g Xylit (Gewichtsverhältnis 9:1 in 294 g vorge-legtem flüssigem Fluorwasserstoff gelöst (30 proz. Lösung der Komponenten). Nach 1 Stunde Reaktion bei 25°C wird wie in Beispiel 1 beschrieben weiterverfahren. Man erhält nach Gefriertrocknung farblose Saccharide: 103,7 g (82,3 Gew.-%).

Red. Endgruppengehalt: 6,5% $[\alpha]_D^{20}$ (C=10, $H_2O$)=+102,6°
HPLC-Analytik: Glucose 1,7%
Xylit 1,0%
Lävoglucosan <0,2%

Beispiel 13

In der in Beispiel 1 beschriebenen Apparatur werden 130,3 g trockene Glucose und 0,013 g Sorbit (0,01 Gew.-%) in 304 g vorgelegtem flüssigem Fluorwasserstoff gelöst (30 proz. Lösung der Komponenten) und 1 Stunde bei 25°C gehalten. Nach der in Beispiel 1 beschriebenen Aufarbeitung und Gefriertrocknung erhält man 113,8 g farblose Saccharide (87,3 Gew.-%).

Red. Endgruppengehalt: 8,7% $[\alpha]_D^{20}$ (C=10, $H_2O$)=+122,5°
HPLC-Analytik: Glucose 2,4%
Sorbit —%
Lävoglucosan <0,2%

Nachweis des eingebauten Polyalkohols durch saure Totalhydrolyse

Stellvertretend für die anderen Beispiel wird mit den gemäß Beispiel 1, 4 und 7 erhaltenen Produkten eine saure Totalhydrolyse durchgeführt. Jeweils 5 g der Proben werden in 100 ml 1,5 proz. Schwefelsäure gelöst und in einem Glasautoklaven 2 Stunden bei 135°C gehalten. Nach dem Abkühlen wird mit festem Bariumcarbonat neutralisiert, abzentrifugiert und der Überstand gefriergetrocknet.

| HPLC-Analyse | Glucose | Sorbit | Rest-Polysaccharide |
|---|---|---|---|
| Beispiel 1 | 96,2 | 0,9 | 2,4 |
| Beispiel 4 | 89,5 | 9,7 | — |
| Beispiel 7 | 85,9 | 9,5 | 4,1 |

Die folgenden Beispiele 14—17 beschreiben die Verwendung der erfindungsgemäßen Polysaccharide, z.B. aus Glucose oder Stärke und Sorbit hergestellt, in diätetischen Nahrungsmitteln. Für die Ausführung der Rezept-Beispiele lassen sich übliche standardisierte Herstellungsverfahren anwenden.

Beispiel 14

Hart-Konfekt

| Bestandteile | Gramm |
|---|---|
| Polysaccharide in Pulverform | 65,0 |
| Saccharose | 65,0 |
| Natriumcitrat | 0,75 |
| Wasser | 34,55 |
| Citronensäure, wasserfrei | 2,0 |
| Zitronenaroma (Givaudan 61 318) | 0,5 |

Die Polysaccharide, Saccharose und Natriumcitrat werden dem Wasser zugesetzt und unter Rühren bis zur Lösung erwärmt, dann die Mischung auf 110—115°C kurz erhitzt und bis zum leichten Verdicken abgekühlt. Die zähe Mischung wird auf eine eingeölte Steinplatte gegossen, mit Zitronensäure und Zitronenaroma bestreut und damit verknetet; danach wird die Masse in einzelne Bonbons aufgeteilt.

# EP 0 166 362 B1

### Beispiel 15
### Instant-Schokoladenpudding

| Bestandteil | Gramm |
|---|---|
| Polysaccharide | 28,9 |
| Saccharose (als Puderzucker) | 47,8 |
| Lebensmittelstärke: Baka-Snack-(Laing National) | 33,9 |
| Kakao-Pulver | 24,6 |
| Natriumchlorid | 0,6 |
| Natriumpyrophosphat | 2,5 |
| Dinatriumhydrogenorthophosphat (wasserfrei) | 4,6 |
| Vanille-Aroma (Firmenich Nr. 55.900/AP 05.51) | 0,21 |
| Milch | 780 ml |

Die trockenen Bestandteile werden vermischt und in die Milch eingerührt, mit einem Handmixer 1 min bei Stufe 1 gerührt, dann 2 min bei höherer Stufe. Die Mischung wird in Schalen gegossen und kühl gestellt.

### Beispiel 16
### Kekse

| Bestandteile | Gramm |
|---|---|
| (Keks-)Mehl | 60,5 |
| Polysaccharide | 48,4 |
| Zellulosepulver (Whatman CF 11) | 24,2 |
| Granulierter Zucker | 33,9 |
| Natriumchlorid | 0,5 |
| Butter | 21,8 |
| Ei (aus Eipulver) | 24,2 |
| Vanillinzucker | 0,7 |
| Natriumhydrogencarbonat | 0,7 |
| Wasser | 9,7 |

Natriumhydrogencarbonat wird in Wasser gelöst und zusammen mit allen anderen Bestandteilen in einem Hobart-Mixer zu einem Teig gerührt (evtl. Wasser nachgeben). Aus dem Teig werden die Formen ausgestochen und auf einem Blech bei 180°C 8—10 min ausgebacken.

Beispiel 17
Gelatine-Dessert

| Bestandteile | Gramm |
|---|---|
| Polysaccharide | 20,0 |
| Saccharose | 20,0 |
| Natriumcitrat | 0,27 |
| Citronensäure | 1,10 |
| Gelatine (Croda 160 Bloom) | 7,0 |
| Zitronenaroma (IFF 17.41.0195) | 0,31 |
| Farbstoff BBA-Pulver (H 7461) | 0,2 |
| Wasser | 200,0 |

Alle Bestandteile werden in heißem Wasser unter Rühren gelöst, dann in bereitgestellte Formen gegossen und kühl gestellt.

Enzymatische Abbaubarkeit

In einer einfachen Versuchsanordnung wird die enzymatische Abbaubarkeit der erfindungsgemäßen Produkte untersucht (Tab. 2). Eine 3 proz. Lösung des zu untersuchenden Produktes wird unter literaturbekannten Bedingungen mit—Amylase/Amyloglucosidase behandelt. Jeweils zu Beginn der Messung und nach 6 Stunden wird eine Glucose-Bestimmung durchgeführt (als Standards werden Kartoffelstärke und ein handelsübliches Schmelzkondensat aus Glucose/Sorbit verwendet).

TABELLE 2
Enzymatische Abbauversuche der erfindungsgemäßen Produkte

| Beispiel | Glucose-Konz. in %<br>enzym. Best. (HPLC)<br>Ausgangswert | enzym. Best.<br>nach Enzymbeh. |
|---|---|---|
| 1 | 2,7 (2,8—3,1) | 13,8 |
| 2 | 1,3 (1,4) | 8,1 |
| 3 | 2,7 | 13,0 |
| 4 | 2,2 (2,8) | 13,4 |
| 7 | 1,8 (2,3) | 15,0 |
| 8 | 3,7 (3,6) | 12,6 |
| 10 | 0,8 (1,2) | 12,3 |
| 11 | 0,9 (1,75) | 8,7 |
| 12 | 2,2 (1,7) | 9,9 |
| 13 | 2,4 (2,4) | 10,3 |
| Kartoffelstärke | 0,01 | 76,0 |
| Schmelzkondensat | 3,9 | 12,5 |

Beispiel 18

In einem zylindrischen Rührkessel aus Edelstahl wurden 400 g trockener, flüssiger Fluorwasserstoff auf −25°C abgekühlt und unter weiterer Außenkühlung ein Gemisch aus 200 g D-(+)-Galactose und 2 g Sorbit so eingetragen, daß die Innentemperatur +0°C erreichte. Dann wurd die Kühlung entfernt und bei einer Innentemperatur von +5 bis +12°C 1 Std. nachgerührt. Danach wurde das Kühlbad durch ein Wasserbad von +40°C ersetzt, ein solegespeister absteigender Edelstahlkühler aufgesetzt, der in eine Trockeneis-gekühlte Vorlage mündete, und ein zum raschen Abdestillieren des Fluorwasserstoffs ausreichendes Vakuum angelegt. Diese Vakuum wurde im Lauf der Zeit verbessert, um eine hohe Destillationsgeschwindigkeit aufrechtzuerhalten. Auf diese Weise wurden in einer Stunde 550 g Fluorwasserstoff zurückgewonnen. Der Rückstand im Reaktor wurde in 1 l kaltem Wasser unter Rühren und mäßiger Kühlung gelöst, nach 30 min mit festem technischem Calciumhydroxid schwach alkalisch gestellt und nach weiteren 30 min durch Einwerfen von Trockeneis neutralisiert. Die so erhaltene Suspension wurde durch ein Bett aus Filterhilfsmittel abgesaugt und das klare, nur schwach gefärbte Filtrat gefriergetrocknet. Man erhielt einen fast farblosen Feststoff in einer Ausbeute von 182 g (90%, bezogen auf die eingesetzte Galaktose).

Red. Endgruppengehalt: 5,9% $[\alpha]_D^{20}$ (c=10, $H_2O$)=+167,1°

Beispiel 19

Die Reaktion wird in einer 650 ml-Polytetrafluoräthylen-Vakuum-Destillationsapparatur durchgeführt. Zu dem vorgelegten auf 0°C vorgekühlten, flüssigen Fluorwasserstoff (300 g) werden unter Rühren 115 g wasserfreie Mannose und 12,9 g Sorbit (10%, bezogen auf das Ausgangsmaterial) gegebenen und das Gemisch 1 h bei 20°C gerührt (Mangetrührung). Unter Erwärmen auf 50—60°C und Rühren wird bei langsam verbessertem Vakuum der Fluorwasserstoff abdestilliert, der Hauptteil bei vollem Wasserstrahlvakuum. Nach 1,5—2,5 h sind etwa 90—95% des eingesetzten Fluorwasserstoffs entfernt. Man erhält ca. 150—160 g eines wasserhellen Sirups. Dieser wird in 300 ml Wasser aufgenommen, mit festem Calciumcarbonat unter Rühren neutralisiert, das ausgefällte Calciumfluorid abzentrifugiert und der Überstand mit einem Filterhilfsmittel filtriert. Die wasserhelle Lösung wird auf ein Volumen von etwa 200 ml eingeengt und über Nacht gefriergetrocknet. Man erhält 104 g farbloses, amorphes nur wenig hygroskopisches Pulver (81,3 Gew.-%).

Red. Endgruppengehalt: 3,6% $[\alpha]_D^{20}$ (c=10, $H_2O$)=46,1°

Beispiele 20 bis 27

Entsprechend dem in Beispiel 18 beschriebenen Vorgehen werden verschiedene Mono- bzw. Disaccharide in flüssigem Fluorwasserstoff umgesetzt. Die Einzeldaten sind in Tabelle 3 wiedergegeben.

EP 0 166 362 B1

## TABELLE 3
Angaben zu den Versuchen mit verschiedenen Kohlenhydraten

| Bsp. | Ausgangs-material | Einsatz-menge g | Polyalkohol Sorbit g | HF-Menge g | Produkt Ausbeute | | Red. Endgr. $[\alpha]_D^{20}$ | |
|---|---|---|---|---|---|---|---|---|
| | | | | | g | % v. Einsatz | geh. % | (c=10, $H_2O$) |
| 20 | D-Mannose | 200 | 2 | 400 | 172 | 85 | 2,4 | + 62,2° |
| 21 | D-Lactose | 200 | 2 | 400 | 182 | 90 | 6,1 | +142,9° |
| 22 | Guaran (Meyproguar) | 200 CSAA M-225 | 2 | 400 | 182 | 90 | 9,7 | + 88,2° |
| 23 | D-Saccharose | 200 | 2 | 400 | 186 | 92 | 3,7 | + 28,8° |
| 24 | D-Lactose | 118 | 6,2 | 290 | 96 | 77 | 4,8 | +133,0° |
| 25 | D-Saccharose | 110 | 12,3 | 290 | 106 | 87 | 6,9 | + 27,6° |
| 26 | D-Galactose | 118,5 | 6,2 | 290 | 94 | 75 | 5,2 | +141,8° |

Beispiel 27

Als Maß für die enzymatische in vivo-Abbaubarkeit der erfindungsgemäßen Produkte wird das Verhalten gegenüben den körpereigenen Enzymen Amylase/Amyloglucosidase (Behandlung A) und β-Galactosidase (Behandlung B) in vitro überprüft (vgl. P. Präve et al., Handbuch der Biotechnologie, Akadem. Verlagsanstalt, Wiesbaden 1982, S. 403 f., sowie Methoden der enzymatischen Lebensmittelanalytik, Boehringer Mannheim 1983). Jeweils zu Beginn der Messung und nach 6 bzw. 1 Stunde werden enzymatische Monosaccharid-Bestimmungen von Glucose bzw. Galactose durchgeführt (Lit. vgl. oben; als Standards werden Kartoffelstärke und ein literaturbekanntes Schmelzkondensat—vgl. brit. Patentschrift 1 262 842—bzw. Lactose verwendet), deren Ergebnisse in Tab. 4 wiedergegeben sind.

TABELLE 4
In vitro-Abbau der erfindungsgemäßen Produkte durch
Amylase/Amyloglucosidase (A) bzw. β-Galactosidase (B)-Behandlung

| Beispiel | A: Glucose-Konz. in % | | B: Galactose-Konz. in % | |
| Ausgangsmaterial | Ausgangs- | Endwert | Ausgangs- | Endwert |
| --- | --- | --- | --- | --- |
| 18 (Gal) | — | — | 1,50 | 1,98 |
| 21 (Lac) | 0,6 | 2,7 | 0,44 | 0,92 |
| 22 (Guaran) | — | — | 0,95 | 1,08 |
| 23 (Sac) | 0,3 | 8,0 | — | — |
| 24 (Lac) | 0,88 | 3,62 | 0,75 | 0,74 |
| 25 (Sac) | 1,56 | 8,27 | — | — |
| 26 (Gal) | — | — | 2,51 | 2,93 |
| Kartoffelstärke | 0,01 | 76,0 | — | — |
| Schmelzkondensat | 3,9 | 12,5 | — | — |
| Lactose | — | — | 0 | 99,4 |

**Patentansprüche**

1. Verfahren zur Herstellung von wasserlöslichen Polysacchariden, dadurch gekennzeichnet, daß man Aldohexosen oder Kohlenhydrate, die sich zu mindestens 50 Mol-% von Aldohexosen als Monomerbausteinen ableiten, mit flüssigem Fluorwasserstoff, der gegebenenfalls gleichzeitig als Lösemittel verwendet wird, bei einer Temperatur von −25° bis höchstens 120°C umsetzt, diesen abdestilliert und mehrwertige Alkohole in einer Menge von mindestens 0,01%, bezogen auf das Gewicht der Summe von Aldohexose und Kohlenhydrat, mitverwendet.

2. Verfahren nach Anspruch 1, dadurch gekennzeichnet, daß die Umsetzung in Gegenwart von 0,01 bis 20% des mehrwertigen Alkohols durchgeführt wird.

3. Verfahren nach Anspruch 2, dadurch gekennzeichnet, daß die Umsetzung in Gegenwart von 0,05 bis 10%, insbesondere von 0,1 bis 5%, des mehrwertigen Alkohols durchgeführt wird.

4. Verfahren nach einem oder mehreren der Ansprüche 1 bis 3, dadurch gekennzeichnet, daß die Umsetzung bei einer Temperatur von +10°C bis 80°C durchgeführt wird.

5. Verfahren nach einem oder mehreren der Ansprüche 1 bis 4, dadurch gekennzeichnet, daß die Gesamtmenge von Aldohexosen und Kohlenhydrat in der Fluorwasserstofflösung in einer Konzentration von 10 bis 60, vorzugsweise 25 bis 35 Gew.-%, bezogen auf die Lösung, vorliegt.

6. Wasserlösliche Polysaccharide, erhalten nach dem Verfahren gemäß einem oder mehreren der Ansprüche 1 bis 5.

7. Wasserlösliche Polysaccharide aus Umsetzungsprodukten einer Aldohexose oder eines Kohlenhydrates, das sich zu mindestens 50 Mol-% von Aldohexosen als Monomerbausteinen ableitet, gekennzeichnet durch einen Gehalt an Gruppen eines mehrwertigen Alkohols, wobei der Gehalt an den Gruppen des mehrwertigen Alkohols im Bereich von 0,01 bis 20, vorzugsweise im Bereich von 0,05 bis 10 insbesondere im Bereich von 0,1 bis 5 Gew.-%, des Saccharids, an das er gebunden ist, beträgt.

8. Verwendung der Polysaccharide nach Anspruch 6 oder 7 als Wasserbinde- bzw. Wasserrückhaltemittel.

9. Verwendung der Polysaccharide nach Anspruch 6 oder 7 in Lebensmitteln.

10. Ausführungsform nach einem oder mehreren der Ansprüche 1 bis 9, dadurch gekennzeichnet, daß sich das Polysaccharid ausschließlich von Glucose ableitet.

**Revendications**

1. Procédé pour préparer des polysaccharides solubles dans l'eau, procédé caractérisé en ce qu'on fait réagir des aldohexoses, ou des glucides dérivant, pour au moins 50% en moles, d'aldohexoses comme éléments constitutifs monomères, avec du fluorure d'hydrogène liquide, lequel sert éventuellement en même temps de solvant, à une température comprise entre −25 et au plus 120°C, on chasse celui-ci par distillation et on utilise en même temps des alcools polyvalents en une quantité d'au moins 0,01% par rapport au poids de la somme de l'aldohexose et du glucide.

2. Procédé selon la revendication 1, caractérisé en ce qu'on effectue la réaction en présence de 0,01 à 20% du alcool polyvalent.

3. Procédé selon la revendication 2, caractérisé en ce qu'on effectue la réaction en présence de 0,05 à 10% du alcool polyvalent, plus particulièrement de 0,1 à 5%.

4. Procédé selon l'une quelconque des revendications 1 à 3, caractérisé en ce qu'on effectue la réaction à une température de +10 à 80°C.

5. Procédé selon l'une quelconque des revendications 1 à 4, caractérisé en ce que la quantité totale des aldohexoses et du glucide se trouve, dans la solution de fluorure d'hydrogène, à une concentration de 10 à 60% en poids, de préférence de 25 à 35% en poids, par rapport à la solution.

6. Polysaccharides solubles dans l'eau qui ont été obtenus par un procédé selon l'une quelconque des revendications 1 à 5.

7. Polysaccharides solubles dans l'eau constitués de produits de réaction d'un aldohexose, ou d'un glucide dérivant, pour au moins 50% en moles, d'aldohexoses comme éléments constitutifs monomères, polysaccharides caractérisés en ce qu'ils contiennent des radicaux d'un alcool polyvalent, la teneur en radicaux du alcool polyvalent étant comprise entre 0,01 et 20% en poids, de préférence entre 0,05 et 10% en poids ou, mieux encore, entre 0,1 et 5% en poids, par rapport au saccharide auquel il est lié.

8. Application des polysaccharides selon l'une des revendications 6 et 7 comme agents de fixation ou de rétention d'eau.

9. Application des polysaccharides selon l'une des revendications 6 et 7 dans des produits alimentaires.

10. Mode d'exécution selon l'une quelconque des revendications 1 à 9, caractérisé en ce que le polysaccharide dérive exclusivement du glucose.

**Claims**

1. A process for the preparation of water-soluble polysaccharides, which comprises reacting aldohexoses or carbohydrates, which are derived to the extent of at least 50 mol-% from aldohexoses as monomer structural units, with liquid hydrogen fluoride, which is used at the same time, where appropriate, as the solvent, at a temperature from −25° up to a maximum of 120°C, distilling off the latter and additionally using polyhydric alcohols in an amount of at least 0.01%, relative to the weight of the total of aldohexose and carbohydrate.

2. The process as claimed in Claim 1, wherein the reaction is carried out in the presence of 0.01 to 20% of the polyhydric alcohol.

3. The process as claimed in Claim 2, wherein the reaction is carried out in the presence of 0.05 to 10%, in particular 0.1 to 5%, of the polyhydric alcohol.

4. The process as claimed in one or more of Claims 1 to 3, wherein the reaction is carried out at a temperature of +10°C to 80°C.

5. The process as claimed in one or more of Claims 1 to 4, wherein the total amount of aldohexoses and carbohydrate in the hydrogen fluoride solution is present in a concentration of 10 to 60, preferably 25 to 35% by weight, relative to the solution.

6. A water-soluble polysaccharide obtained by the process as claimed in one or more of Claims 1 to 5.

7. A water-soluble polysaccharide composed of reaction products of an aldohexose or a carbohydrate which is derived to the extent of at least 50 mol-% from aldohexoses as monomer structural units, which contains groups of a polyhydric alcohol in an amount ranging from 0.01 to 20, preferably from 0.05 to 10, in particular from 0.1 to 5% by weight of the saccharide to which it is bonded.

8. The use of the polysaccharide as claimed in Claim 6 or 7 as a water-binding agent or water-retaining agent.

9. The use of the polysaccharide as claimed in Claim 6 or 7 in foodstuffs.

10. An embodiment as claimed in one of more of Claims 1 to 9, wherein the polysaccharide is derived exclusively from glucose.